# EUROPÄISCHE PATENTANMELDUNG

(11) **EP 3 170 385 A1**
(43) Veröffentlichungstag der Anmeldung: **24.05.2017**
(21) Anmeldenummer: 16199156.7
(22) Anmeldetag: 16.11.2016
(51) Int. Cl.: A01F 25/20, B23D 49/00, B23D 61/12, B26D 1/45, B26D 1/00

(54) **SCHNEIDVORRICHTUNG ZUM ABTRENNEN VON SILAGE**

(30) Priorität: 18.11.2015 DE 202015106267 U
(71) Anmelder: Fliegl Agro-Center GmbH, 84556 Kastl (DE)
(72) Erfinder: Fliegl, Josef, 84556 Kastl (DE)
(74) Vertreter: Hofstetter, Schurack & Partner

(57) **Zusammenfassung**

Die Erfindung betrifft eine Schneidvorrichtung (10) zum Abtrennen von Silage, mit einem beweglichen Schneidblech (12), das um eine Hochachse der Schneidvorrichtung (10) gebogen ist und dessen Schneidelemente (14) sich in Richtung der Hochachse der Schneidvorrichtung (10) erstrecken, und mit einer Antriebseinrichtung, mittels welcher das Schneidblech (12) in dessen bogenförmiger Erstreckungsrichtung (ϕ) relativ zu einer Rahmenstruktur (18) der Schneidvorrichtung (10) in eine oszillierende Schneidbewegung versetzbar ist.

## Beschreibung

Die Erfindung betrifft eine Schneidvorrichtung zum Abtrennen von Silage.

In der Landwirtschaft ist es üblich, Silage, welches auch als Gärfutter oder Silo bezeichnet wird als Futtermittel für Nutztiere bereitzustellen. Bei Silage handelt es sich um ein durch Milchsäuregärung konserviertes Futtermittel für Nutztiere. Darüber hinaus können auch nachwachsende Rohstoffe, die als Energiequellen in Biogasanlagen dienen, durch Silierung haltbar gemacht werden.

Die Silage wird üblicherweise in komprimierter Form in sogenannten Silostöcken gelagert und muss beispielsweise zur Verwendung als Futtermittel von den Silostöcken abgetrennt werden. Dafür kommen Schneidvorrichtungen zum Einsatz.

So zeigt die EP 0 411 724 A2 beispielsweise eine Schneidvorrichtung zum Abtrennen von Silage, welche in Hochrichtung verfahrbar an einem Rahmen angeordnet ist. Die Schneidvorrichtung selbst weist dabei drei U-förmig angeordnete Schneidbleche auf, welche jeweils mittels separater Antriebe in oszillierende Schneidbewegungen versetzt werden können. Nachteilig hierbei ist, dass für jede der Schneidbleche separate Antriebseinrichtungen vorgesehen werden müssen.

Die EP 0 090 906 A1 zeigt ebenfalls eine Schneidvorrichtung zum Abtrennen von Silage. Die Schneidvorrichtung umfasst zwei U-förmig ausgebildete Schneidbleche, welche aneinander anliegen. Eines der beiden Schneidbleche kann dabei mittels Antriebsmitteln relativ zu dem anderen Schneidblech auf und ab bewegt werden, wodurch das Abtrennen von Silage begünstigt wird. Die Schneidbewegung erfolgt in Vorschubrichtung, also in Hochrichtung eines Silostocks, aus welchem die Silage abzutrennen ist.

Die DE 39 00 576 A1 zeigt eine weitere Schneidvorrichtung zum Abtrennen von Silage. Die Schneidvorrichtung umfasst auch mehrere in U-Form angeordnete Schneidbleche, wobei eine relativ aufwendige Umlenkeinrichtung vorgesehen ist, damit nicht für jedes der Schneidbleche eine einzelne Antriebseinrichtung vorgesehen werden muss.

Es ist die Aufgabe der vorliegenden Erfindung, eine Schneidvorrichtung zum Abtrennen von Silage bereitzustellen, welche einen besonders einfachen Aufbau aufweist.

Diese Aufgabe wird durch eine Schneidvorrichtung zum Abtrennen von Silage mit den Merkmalen des Anspruchs 1 gelöst. Vorteilhafte Ausgestaltungen mit zweckmäßigen und nicht trivialen Weiterbildungen der Erfindung sind in den abhängigen Ansprüchen angegeben.

Die erfindungsgemäße Schneidvorrichtung zum Abtrennen von Silage umfasst ein bewegliches Schneidblech, das um eine Hochachse der Schneidvorrichtung gebogen ist und dessen Schneidelemente sich in Richtung der Hochachse der Schneidvorrichtung erstrecken. Die Schneidvorrichtung umfasst des Weiteren eine Antriebseinrichtung, mittels welcher das Schneidblech in dessen bogenförmige Erstreckungsrichtung relativ zu einer Rahmenstruktur der Schneidvorrichtung in eine oszillierende Schneidbewegung versetzbar ist.

Es ist also erfindungsgemäß vorgesehen, bei der Schneidvorrichtung ein bewegliches Schneidblech vorzusehen, welches mittels einer Antriebseinrichtung in eine oszillierende Schnittbewegung versetzt werden kann. Dadurch, dass das Schneidblech um die Hochachse der Schneidvorrichtung gebogen ist, also bogenförmige ausgebildet ist, kann das Schneidblech die abzutrennende Silage umgeben bzw. umschließen, ohne dass dafür weitere bewegliche Schneidbleche erforderlich sind.

Durch die gewölbte Form des Schneidblechs kann eine besonders hohe Schnittgeschwindigkeit und Schnittsauberkeit erzielt werden. Des Weiteren kann das bewegliche Schneidblech in eine oszillierende Schneidbewegung mit einem besonders hohen Hub versetzt werden. In Folge dessen kann die Schneidvorrichtung mit einem besonders großen Vorschub durch einen Silostock hindurchtauchen, um die Silage abzutrennen.

Das bewegliche und mittels der Antriebseinrichtung antreibbare Schneidblech kann beispielsweise halbkreisförmig ausgebildet sein. Es ist auch möglich, dass das Schneidblech als bogenförmiger Abschnitt eines Ovals oder dergleichen ausgebildet ist. Mit anderen Worten muss das Schneidblech keinen konstanten Biegeradius entlang seiner bogenförmigen Erstreckungsrichtung aufweisen.

Aufgrund der erfindungsgemäß ausgebildeten bogenförmigen Gestaltung des Schneidblechs muss nur ein einziges Schneidblech zum Abtrennen von Silage vorgesehen werden. Dadurch kann die Antriebseinrichtung relativ einfach gestaltet werden, da nicht mehrere Schneidbleche angetrieben und gegebenenfalls hinsichtlich ihrer Bewegungen synchronisiert werden müssen.

Eine vorteilhafte Ausführungsform der Erfindung sieht vor, dass die Schneidvorrichtung ein unbeweglich an der Rahmenstruktur befestigtes Gegenschneidblech aufweist, das ebenfalls um die Hochachse der Schneidvorrichtung gebogen ist und dessen Schneidelemente sich in Richtung der Hochachse der Schneidvorrichtung erstrecken, wobei das bewegliche Schneidblech entlang seiner bogenförmigen Erstreckungsrichtung mit einer Innenseite relativbeweglich an einer Außenseite des unbeweglichen Gegenschneidblechs anliegt. Während des Betriebs der Schneidvorrichtung wird also das außenliegende bewegliche Schneidblech mittels der Antriebseinrichtung in oszillierende Schneidbewegungen versetzt, in Folge dessen sich das Schneidblech in seiner bogenförmigen Erstreckungsrichtung relativ zu dem innenliegenden statischen Gegenschneidblech bewegt. Dadurch kann die Schnittleistung beim Abtrennen von Silage verbessert werden. Ferner kann das unbewegliche Gegenschneidblech als eine Art Stützstruktur für das bewegliche Schneidblech dienen, so dass das bewegliche Schneidblech relativ dünnwandig und leicht ausgebildet werden kann.

Eine weitere vorteilhafte Ausführungsform der Erfindung sieht vor, dass das Schneidblech mehrere, sich in der bogenförmigen Erstreckungsrichtung des Schneidblechs erstreckende Langlöcher aufweist, in welche jeweilige am Gegenschneidblech angeordnete Führungselemente eingreifen. Dadurch kann eine besonders präzise Führung und Relativbewegung des beweglichen Schneidblechs gegenüber dem Gegenschneidblech sichergestellt werden.

In weiterer vorteilhafter Ausgestaltung der Erfindung ist es vorgesehen, dass das Gegenschneidblech einen sich in der bogenförmigen Erstreckungsrichtung des Schneidblechs erstreckenden Absatz aufweist, an dessen Unterseite das Schneidblech mit einer gegenüberliegend von seinen Schneidelementen angeordneten Oberseite zumindest teilweise anliegt. Durch den am Gegenschneidblech ausgebildeten Absatz kann das außenliegende bewegliche Schneidblech also in Hochrichtung der Schneidvorrichtung abgestützt werden, wodurch ebenfalls eine besonders wunschgemäße und exakte Relativbewegung des Schneidblechs gegenüber dem Gegenschneidblech sichergestellt werden kann.

Eine weitere vorteilhafte Ausführungsform der Erfindung sieht vor, dass bezogen auf die bogenförmige Erstreckungsrichtung des Schneidblechs an dessen gegenüberliegenden Endbereichen jeweilige Antriebszylinder der Antriebseinrichtung befestigt sind, mittels welchen das Schneidblech in die oszillierende Schneidbewegung versetzbar ist. Dadurch ergibt sich ein besonders schlanker Aufbau der Schneidvorrichtung, da die Antriebszylinder nicht in das Schneidblech integriert sind. Zum einen kann das Schneidblech dadurch beim Abtrennen der Silage besonders einfach durch die Silage hindurchtauchen. Zum anderen befinden sich die Antriebszylinder nicht in dem Bereich des Schneidblechs, welcher beim Abtrennen der Silage üblicherweise besonders stark verschmutzt wird. Die Lebensdauer der Antriebszylinder kann dadurch erheblich gesteigert werden und die Antriebszylinder müssen wesentlich seltener von Silageresten oder anderen Schmutzpartikeln gereinigt werden.

In weiterer vorteilhafter Ausgestaltung der Erfindung ist es vorgesehen, dass die Antriebseinrichtung dazu ausgelegt ist, die Antriebszylinder derart zu betreiben, dass diese gegenläufig ein- und ausgefahren werden, um das Schneidblech in die oszillierende Schneidbewegung zu versetzten. Mit anderen Worten sind die Antriebszylinder vorzugsweise parallel geschaltet, so dass wenn einer der Antriebszylinder ausfährt, der andere Antriebszylinder einfährt und umgekehrt. Durch die Synchronisierung der Antriebszylinder kann eine besonders effektive Schnittleistung mittels der Schneidvorrichtung erzielt werden.

Gemäß einer alternativen vorteilhaften Ausführungsform der Erfindung ist es vorgesehen, dass die Antriebseinrichtung einen mittels eines Hydraulikmotors antreibbaren Kurbelstangenantrieb aufweist, mittels welchem das Schneidblech in die oszillierende Schneidbewegung versetzbar ist.

Eine weitere vorteilhafte Ausführungsform der Erfindung sieht vor, dass die Antriebseinrichtung dazu ausgelegt ist, das Schneidblech zumindest während der oszillierenden Schneidbewegung in der bogenförmigen Erstreckungsrichtung des Schneidblechs durchgehend mit einer Zugspannung zu beaufschlagen. Während der Schneidbewegung steht das Schneidblech dadurch also durchgehend unter Zugspannung und wird nie in der bogenförmigen Erstreckungsrichtung mit einer Druckspannung beaufschlagt. Das Schneidblech kann dadurch besonders dünnwandig ausgebildet werden, da es im Betrieb nur auf Zug beansprucht wird. Dadurch kann das Schneidblech beim Abtrennen der Silage besonders gut durch die Silage hindurchtauchen und diese abtrennen.

Gemäß einer weiteren vorteilhaften Ausführungsform der Erfindung ist es vorgesehen, dass die Schneidvorrichtung mit ihrer Rahmenstruktur an einem Hubgerüst anordenbar ist, mittels welchem die Schneidvorrichtung in einer parallel zur Hochachse der Schneidvorrichtung verlaufenden Vorschubrichtung auf und ab bewegbar ist.

Schließlich ist es gemäß einer weiteren vorteilhaften Ausführungsform der Erfindung vorgesehen, dass die Schneidvorrichtung mit ihrer Rahmenstruktur an einem Frontlader eines Traktors befestigbar ist. Die Schneidvorrichtung kann also auf einfache Weise mittels eines Frontladers eines Traktors gehandhabt werden, um Silage von einem Silostock abzutrennen und wegzutransportieren.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine Perspektivansicht einer Schneidvorrichtung zum Abtrennen von Silage, welche ein gebogenes außenliegendes Schneidblech aufweist, welches an einem innenliegenden ebenfalls gebogen ausgebildeten Gegenschneidblech angeordnet ist;
- Fig. 2: eine Detailansicht von jeweiligen Schneidelementen des Schneidblechs und des Gegenschneidblechs;
- Fig. 3: eine Seitenansicht der Schneidvorrichtung;
- Fig. 4: eine Draufsicht auf die Schneidvorrichtung; und in
- Fig. 5: eine Rückansicht der Schneidvorrichtung.

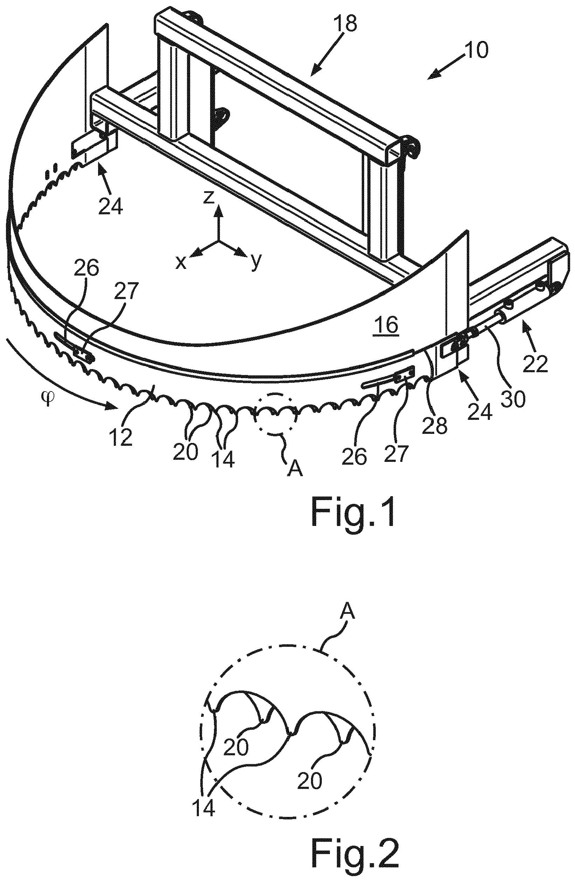

Eine insgesamt mit 10 bezeichnete Schneidvorrichtung zum Abtrennen von Silage ist in einer Perspektivansicht in Fig. 1 gezeigt. Die Schneidvorrichtung 10 umfasst ein Schneidblech 12, das um eine in Hochrichtung z der Schneidvorrichtung 10 verlaufende Hochachse der Schneidvorrichtung 10 gebogen ist. Jeweilige Schneidelemente 14 des Schneidblechs 12 erstrecken sich dabei in Richtung der Hochachse der Schneidvorrichtung 10. Das Schneidblech 12 ist dabei vorzugsweise aus einem Federstahl hergestellt.

Die Schneidvorrichtung 10 umfasst des Weiteren ein Gegenschneidblech 16, welches unbeweglich an einer Rahmenstruktur 18 der Schneidvorrichtung 10 befestigt ist. Das Gegenschneidblech 16 ist dabei ebenfalls um die Hochachse der Schneidvorrichtung 10 gebogen, wobei sich dessen Schneidelemente 20 ebenfalls in Richtung der Hochachse der Schneidvorrichtung 10 erstrecken. Das Gegenschneidblech 16 ist dabei vorzugsweise aus einer besonders harten und zähen Stahllegierung hergestellt.

Das bewegliche Schneidblech 12 ist entlang einer bogenförmigen Erstreckungsrichtung ϕ mit einer Innenseite relativbeweglich an einer Außenseite des unbeweglichen Gegenschneidblechs 16 angeordnet. Die Schneidvorrichtung 10 umfasst eine nicht näher bezeichnete Antriebseinrichtung, welche zwei Antriebszylinder 22 aufweist, wobei in der in Fig. 1 gezeigten Ansicht lediglich einer der beiden Antriebszylinder 22 zu erkennen ist. Mittels der Antriebszylinder 22, welche bezogen auf die bogenförmige Erstreckungsrichtung ϕ des Schneidblechs 12 an dessen gegenüberliegenden Endbereichen 24 angreifen, kann die Schneidvorrichtung 10 in ihrer bogenförmigen Erstreckungsrichtung ϕ in eine oszillierende Schneidbewegung versetzt werden. Die Schneidvorrichtung 10 bewegt sich während der Schneidbewegung sowohl relativ zur Rahmenstruktur 18 als auch relativ zum an der Rahmenstruktur 18 befestigten Gegenschneidblech 16.

Das Schneidblech 12 kann mehrere, sich in der bogenförmigen Erstreckungsrichtung ϕ des Schneidblechs 12 erstreckende Langlöcher 26 aufweisen, in welche jeweilige am Gegenschneidblech 16 angeordnete Führungselemente 27 eingreifen, welche vorliegend in Form von kleinen Klötzen ausgebildet sind. Dadurch kann eine besonders exakte Führung des außenliegenden Schneidblechs 12 an dem innenliegenden Gegenschneidblech 16 sichergestellt werden. Ferner kann das Gegenschneidblech 16 einen sich in der bogenförmigen Erstreckungsrichtung ϕ des Schneidblechs 12 erstreckenden Absatz 28 aufweisen, an dessen Unterseite das bewegliche Schneidblech 12 mit einer gegenüberliegend von seinen Schneidelementen 14 angeordneten Oberseite zumindest teilweise anliegt. Während der oszillierenden Bewegung des beweglichen Schneidblechs 12 wird dieses also mittels des Absatzes 28 zuverlässig geführt.

In Fig. 2 ist eine Detailansicht A - wie in Fig. 1 gekennzeichnet - dargestellt, in welcher die jeweiligen Schneidelemente 14, 20 des beweglichen Schneidblechs 12 und des unbeweglichen Schneidblechs 16 zu erkennen sind. Sobald das bewegliche Schneidblech 12 mittels der Antriebszylinder 22 in die oszillierende Schneidbewegung versetzt wird, bewegen sich also die Schneidelemente 14 des angetriebenen Schneidblechs 12 an den Schneidelementen 20 des unbeweglichen Gegenschneidblechs 16 vorbei. Durch diese Relativbewegung der Schneidelemente 14, 20 zueinander kann eine besonders gute Schnittleistung beim Abtrennen von Silage erzielt werden.

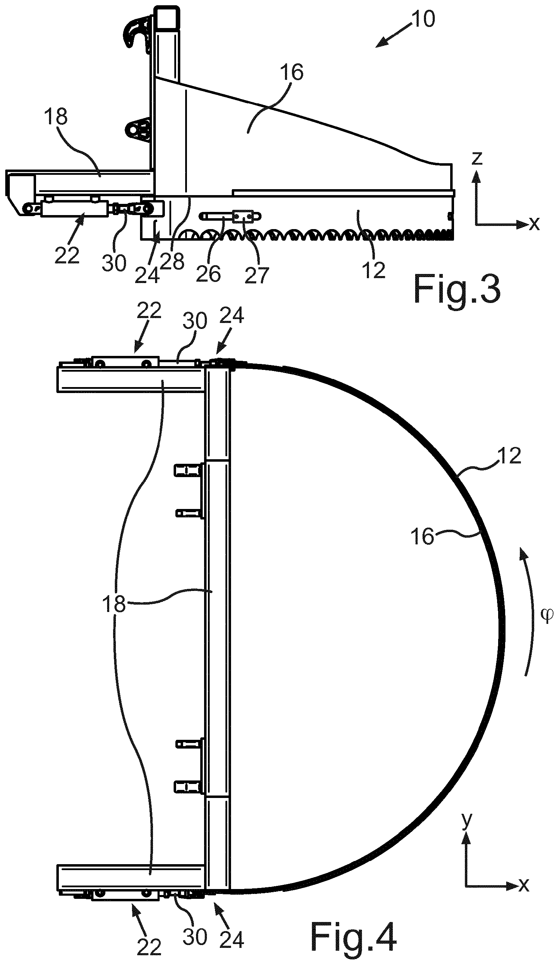

In Fig. 3 ist die Schneidvorrichtung 10 in einer Seitenansicht gezeigt. In der vorliegenden Darstellung ist nochmals gut einer der beiden Antriebszylinder 22 zu erkennen, welcher an einem der beiden Endbereiche 24 des außenliegenden beweglichen Schneidblechs 12 angeordnet ist. Zum Antreiben des Schneidblechs 12 werden jeweilige Kolben 30 der Antriebszylinder 22 in Längsrichtung x der Schneidvorrichtung 10 aus- und eingefahren.

In Fig. 4 ist die Schneidvorrichtung 10 in einer Draufsicht gezeigt, in welcher nochmals die bogenförmige Ausgestaltung des außenliegenden beweglichen Schneidblechs 12 und des innenliegenden unbeweglichen Gegenschneidblechs 16 zu erkennen ist. Die beiden Antriebszylinder 22 werden zum Antreiben des Schneidblechs 12 derart betrieben, dass diese gegenläufig ein- und ausgefahren werden, so dass das Schneidblech 12 in seiner bogenförmigen Erstreckungsrichtung ϕ in die oszillierende Schneidbewegung versetzt wird. Mittels der Antriebszylinder 22 kann das Schneidblech 12 in eine oszillierende Schneidbewegung mit einem relativ großen Hub versetzt werden. In Folge dessen können das angetriebene Schneidblech 12 und das Gegenschneidblech 16 mit einem relativ großen Vorschub in Hochrichtung z der Schneidvorrichtung 10 durch einen Silostock hindurchbewegt werden, um die Silage abzutrennen. Vorzugsweise wird das Schneidblech 12 während der oszillierenden Schneidbewegung durchgehend mittels der Antriebszylinder 22 mit einer Zugspannung beaufschlagt. Das Schneidblech 12 erfährt also durchgehend eine zugschwellende Belastung, so dass das Schneidblech 12 in seiner bogenförmigen Erstreckungsrichtung ϕ zumindest während der oszillierenden Schneidbewegung nie auf Druck beansprucht wird. In Folge dessen kann das Schneidblech 12 besonders dünnwandig ausgebildet werden.

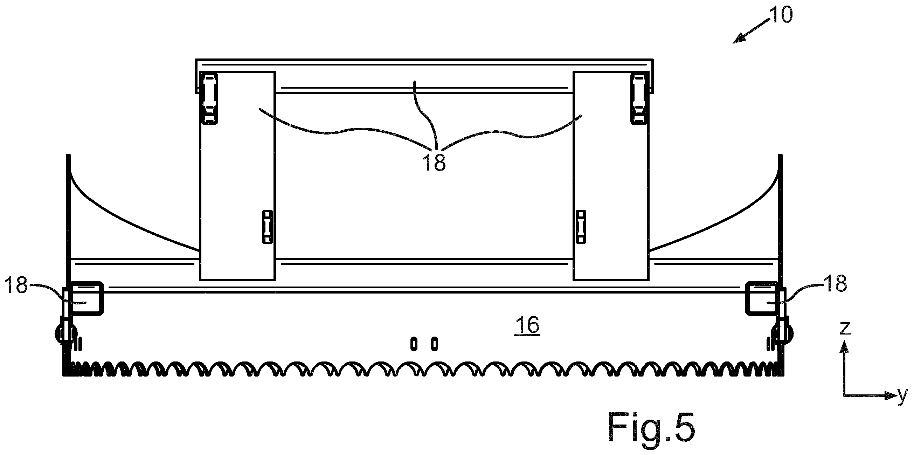

In Fig. 5 ist die Schneidvorrichtung 10 in einer Rückansicht gezeigt. Die Schneidvorrichtung 10 kann mit ihrer Rahmenstruktur 18 beispielsweise an einem Hubgerüst angeordnet werden, mittels welchem die Schneidvorrichtung 10 in einer parallel zur Hochrichtung z der Schneidvorrichtung 10 verlaufenden Vorschubrichtung auf und ab bewegt werden kann. Zum Abtrennen von Silage aus einem Silostock wird die Schneidvorrichtung in eine abwärts gerichtete Vorschubbewegung versetzt während das äußere Schneidblech 12 oszillierend hin und her bewegt wird, um die Silage aus dem Silostock abzutrennen.

Das besagte Hubgerüst kann beispielsweise an einem Frontlader eines Traktors befestigt sein, so dass die Schneidvorrichtung 10 auf einfache Weise mobil eingesetzt werden kann. Alternativ ist es aber auch möglich, dass die Schneidvorrichtung 10 statt an einem Hubgerüst direkt an einem Frontlader eines Traktors befestigt wird, wobei die Vorschubbewegung beim Abtrennen der Silage dann durch den Frontlader bewerkstelligt wird.

### BEZUGSZEICHENLISTE:

- 10: Schneidvorrichtung
- 12: Schneidblech
- 14: Schneidelement
- 16: Gegenschneidblech
- 18: Rahmenstruktur
- 20: Schneidelement
- 22: Antriebszylinder
- 24: Endbereich
- 26: Langloch
- 27: Führungselement
- 28: Absatz
- 30: Kolben
- A: Detailansicht
- x: Längsrichtung
- y: Querrichtung
- z: Hochrichtung
- ϕ: bogenförmige Erstreckungsrichtung

## Patentansprüche

1. Schneidvorrichtung (10) zum Abtrennen von Silage, mit einem beweglichen Schneidblech (12), das um eine Hochachse der Schneidvorrichtung (10) gebogen ist und dessen Schneidelemente (14) sich in Richtung der Hochachse der Schneidvorrichtung (10) erstrecken, und mit einer Antriebseinrichtung, mittels welcher das Schneidblech (12) in dessen bogenförmiger Erstreckungsrichtung (ϕ) relativ zu einer Rahmenstruktur (18) der Schneidvorrichtung (10) in eine oszillierende Schneidbewegung versetzbar ist.

2. Schneidvorrichtung (10) nach Anspruch 1,
**dadurch gekennzeichnet, dass**
die Schneidvorrichtung (10) ein unbeweglich an der Rahmenstruktur (18) befestigtes Gegenschneidblech (16) aufweist, das ebenfalls um die Hochachse der Schneidvorrichtung (10) gebogen ist und dessen Schneidelemente (20) sich in Richtung der Hochachse der Schneidvorrichtung (10) erstrecken, wobei das bewegliche Schneidblech (12) entlang seiner bogenförmigen Erstreckungsrichtung (ϕ) mit einer Innenseite relativbeweglich an einer Außenseite des unbeweglichen Gegenschneidblechs (16) anliegt.

3. Schneidvorrichtung (10) nach Anspruch 2,
**dadurch gekennzeichnet, dass**
das Schneidblech (12) mehrere, sich in der bogenförmigen Erstreckungsrichtung (ϕ) des Schneidblechs (12) erstreckende Langlöcher (26) aufweist, in welche jeweilige am Gegenschneidblech (16) angeordnete Führungselemente (27) eingreifen.

4. Schneidvorrichtung (10) nach Anspruch 2 oder 3,
**dadurch gekennzeichnet, dass**
das Gegenschneidblech (16) einen sich in der bogenförmigen Erstreckungsrichtung (ϕ) des Schneidblechs (12) erstreckenden Absatz (28) aufweist, an dessen Unterseite das Schneidblech (12) mit einer gegenüberliegend von seinen Schneidelementen (14) angeordneten Oberseite zumindest teilweise anliegt.

5. Schneidvorrichtung (10) nach einem der vorhergehenden Ansprüche,
**dadurch gekennzeichnet, dass**
bezogen auf die bogenförmige Erstreckungsrichtung (ϕ) des Schneideblechs (12) an dessen gegenüberliegenden Endbereichen (24) jeweilige Antriebszylinder (22) der Antriebseinrichtung befestigt sind, mittels welchen das Schneidblech (12) in die oszillierende Schneidbewegung versetzbar ist.

6. Schneidvorrichtung (10) nach Anspruch 5,
**dadurch gekennzeichnet, dass**
die Antriebseinrichtung dazu ausgelegt ist, die Antriebszylinder (22) derart zu betreiben, dass diese gegenläufig ein- und ausgefahren werden, um das Schneidblech (12) in die oszillierende Schneidbewegung zu versetzen.

7. Schneidvorrichtung (10) nach einem der Ansprüche 1 bis 4,
**dadurch gekennzeichnet, dass**
die Antriebseinrichtung einen mittels eines Hydraulikmotors antreibbaren Kurbelstangenantrieb aufweist, mittels welchem das Schneideblech (12) in die oszillierende Schneidbewegung versetzbar ist.

8. Schneidvorrichtung (10) nach einem der vorhergehenden Ansprüche,
**dadurch gekennzeichnet, dass**
die Antriebseinrichtung dazu ausgelegt ist, das Schneidblech (12) zumindest während der oszillierenden Schneidbewegung in der bogenförmigen Erstreckungsrichtung (ϕ) des Schneideblechs (12) durchgehend mit einer Zugspannung zu beaufschlagen.

9. Schneidvorrichtung (10) nach einem der vorhergehenden Ansprüche,
**dadurch gekennzeichnet, dass**
die Schneidvorrichtung (10) mit ihrer Rahmenstruktur (18) an einem Hubgerüst anordnenbar ist, mittels welchem die Schneidvorrichtung (10) in einer parallel zur Hochachse der Schneidvorrichtung (10) verlaufenden Vorschubrichtung auf und ab bewegbar ist.

10. Schneidvorrichtung (10) nach einem der vorhergehenden Ansprüche,
**dadurch gekennzeichnet, dass**
die Schneidvorrichtung (10) mit ihrer Rahmenstruktur (18) an einem Frontlader eines Traktors befestigbar ist.
